# EUROPÄISCHE PATENTSCHRIFT

(11) **EP 0 568 757 B1**
(45) Veröffentlichungstag und Bekanntmachung des Hinweises auf die Patenterteilung: **14.08.1996**
(21) Anmeldenummer: 92811009.7
(22) Anmeldetag: 17.12.1992
(51) Int. Cl.: C08L 95/00

(54) **Zur Herstellung von Asphalt-Strassenbelägen dienendes Bindemittel**
Binder for use in asphalt road coverings
Liant utile dans les revêtements routiers asphaltiques

(30) Priorität: 27.04.1992 CH 1347/92
(43) Veröffentlichungstag der Anmeldung: 10.11.1993
(73) Patentinhaber: G. GRISARD AG, CH-4019 Basel (CH)
(72) Erfinder: Herczeg, Julius Ludwig, c/o Grisard AG, CH-4019 Basel (CH)
(74) Vertreter: Eder, Carl E.

(56) Entgegenhaltungen:
- WO-A-93/00406
- CH-A- 641 822
- DE-A- 3 002 371

## Beschreibung

Die Erfindung betrifft ein zur Herstellung von Asphalt-Strassenbelägen dienendes und zum Teil aus Bitumen bestehendes, heiss anzuwendendes Bindemittel.

Das bituminöse Bindemittel kann beispielsweise zur Herstellung eines Asphaltsplittbelages verwendet werden, der auf die Oberfläche einer Strasse aufgetragen wird, um die Griffigkeit des Stassenbelages zu erhöhen und die Strassenunterlage vor dem Eindringen von Wasser sowie vor dem Verschleiss durch den Verkehr zu schützen.

Auf dem Markt bekannte und zur Herstellung von Asphaltsplittbelägen dienende bituminöse Bindemittel sind thermoplastische Kolloidsysteme. Sie bestehen vorzugsweise aus 70 bis 95 Gew.% Bitumen und 30 bis 5 Gew.% Lösungsmittel. Aus dem bei genügend tiefer Temperatur praktisch festen Zustand gehen die Bindemittel mit steigender Temperatur allmählich in einen zähund schliesslich in einen dünnflüssigen Zustand über. Im Gegensatz zu chemisch einheitlichen Stoffen können die bituminösen Bindemittel nicht durch einen Siedepunkt oder Schmelzpunkt charakterisiert werden. Anstelle von Schmelz- oder Siedepunkt kann man als charakteristische Grösse eines Bitumens bzw. eines bituminösen Bindemittels jedoch die Temperaturder sogenannte Erweichungspunkt - ermitteln, bei der das Bitumen bzw. das bituminöse Bindemittel eine bestimmte Viskosität aufweist.

Das im Bindemittel vorhandene Bitumen ist ein durch fraktionierte Destillation von Erdöl gewonnenes, kolloiddisperses Zweiphasensystem. Die verschiedenen Bitumensorten werden aufgrund ihrer Härte klassifiziert, wobei es üblich ist, sie durch eine Zahl zu kennzeichnen, welche ein Mass für die Härte (Penetration) ist.

Das im Bindemittel ebenfalls vorhandene Lösungsmittel enthält hochsiedende Kohlenwasserstoffverbindungen, beispielsweise Whitespirit und/oder Petrol oder Teeröle. Teeröle werden bei der Destillation des Rohteeres gewonnen und nach ihrem spezifischen Gewicht in Leicht- Mittel- Schwer- und Anthracenöle eingeteilt. Es handelt sich dabei jeweils um Gemische zahlreicher zum Teil noch unbekannter Kohlenwasserstoffverbindungen. Das Lösungsmittel dient hierbei insbesondere dazu, die zur Herstellung des Asphaltsplittbelages notwendige Viskosität einzustellen, das heisst das im Bindemittel enthaltene Bitumen zur Verarbeitung fliessfähig zu machen.

So wird beispielsweise bei der Herstellung eines Asphaltsplittbelages das Bindemittel durch Erhitzen dünnflüssig gemacht - also die Viskosität des Bindemittels erniedrigt -, auf die zu behandelnde Strassenoberfläche aufgebraust und anschliessend mit Splitt abgedeckt. Beim Abkühlen des aufgetragenen Splittbelages steigt dann die Viskosität des Bindemittels wieder an, wobei dieses zugleich seine Klebekraft entwickelt, so dass der Splittbelag verfestigt und mit dem darunterliegenden Strassenbelag verklebt wird. Ein weiterer Viskositätsanstieg und die daraus folgende Weiterverfestigung des Splittes erfolgt schliesslich durch die Verdichtung der Splittschicht durch Walze und Verkehr, durch die Verdunstung von im Bindemittel vorhandenen Kohlenwasserstoffverbindungen und durch Oxidation des im Bindemittel vorhandenen Bitumens.

Diese Verwendungsform eines bituminösen Bindemittels weist nun die Nachteile auf, dass es mit einer mindestens 140°C betragenden Temperatur verarbeitet werden muss und dass dabei mindestens ein Teil der im Bindemittel vorhandenen Kohlenwasserstoffverbindungen direkt beim Verbrausen verdunstet und dadurch die Atmosphäre verunreinigt. Der übrige Teil der Kohlenwasserstoffverbindungen verbleibt jedoch nicht im Asphaltsplittbelag, sondern wird - wie bereits erwähnt - mit der Zeit ebenfalls verdunsten, was natürlich eine zusätzliche Belastung der Atmosphäre zur Folge hat.

Ein in Bezug auf die Umweltverträglichkeit bereits weiterentwickeltes Bitumenpräparat ist aus der DE-A-30 03 371 bekannt. Diese Offenlegungsschrift offenbart nämlich ein zum Imprägnieren eines Stoffes dienendes Bitumenpräparat, das anstelle von organischen Lösungsmitteln Stearin, Paraffin und gegebenenfalls Leinölfirnis enthält. Die pflanzlichen Öle dienen bei dieser Verwendungsform insbesondere dazu, dem Bitumenpräparat eine bestimmte, gleichbleibende Viskosität zu verleihen, wozu diesem zusätzlich ein Stabilisator, beispielsweise β-Naphtol, beigefügt wird.

Ferner sei in diesem Zusammenhang noch erwähnt, dass aus der CH-A-641 822 ein Verfahren zur Herstellung eines kunststoffmodifizierten Strassenbaubindemittels auf Basis eines Strassenbaubitumens, eines Polymerisates und mindestens eines pflanzlichen Öles bekannt ist. Bei diesem Verfahren wird einer aus Strassenbaubitumen und Polymerisat gebildeten Mischung 1 - 5 Gew.% eines pflanzlichen Öles beigefügt, um dadurch ein homogenes Vermischen von Strassenbaubitumen und Polymerisat zu ermöglichen. Gemäss dem einzigen in der Patentschrift offenbarten Ausführungsbeispiel werden hierbei einer aus 470 kg Strassenbaubitumen und 24 kg Polymerisat gebildeten Mischung 5 kg Naphtensäure und 5 kg Rüböl beigemischt. Nach einer weiteren Zugabe von 479 kg Strassenbaubitumen folgt dann die Einstellung der gewünschten Viskosität des Bindemittels in bekannter Weise mit etwa 2,4 Gew.% Xylol oder Toluol.

Der vorliegenden Erfindung liegt nun die Aufgabe zu Grunde ein zur Herstellung von Asphalt-Strassenbelägen dienendes Bindemittel auf Bitumenbasis zu schaffen, das die vorgenannten Nachteile von bekannten Strassenbaubindemitteln entweder überhaupt nicht oder in nur geringem Masse aufweist, und insbesondere zur Herstellung eines Asphaltsplittbelages verwendbar ist.

Es wurde nun überraschend gefunden, dass bei der Herstellung von Asphaltsplittbelägen das umweltschädliche Lösungsmittel vollständig durch mindestens ein umweltverträgliches tierisches und/oder pflanzliches Öl oder Fett ersetzt werden kann.

Die gestellte Aufgabe wird daher gelöst, durch die Verwendung eines aus Bitumen bestehenden, heiss anzuwendenden Strassenbaubindemittels, das frei von einem Kohlenwasserstoffverbindungen enthaltenden Lösungsmittel ist und mindestens ein tierisches und/oder pflanzliches Fett oder Öl enthält. Zur Herstellung des Bindemittels eignen sich hierbei insbesondere das trocknende Leinöl und das halbtrocknende Rapsöl.

Zur Herstellung eines Asphaltsplittbelages wird das erfindungsgemässe Bindemittel - wie die bereits bekannten Bindemittel - durch Erhitzen dünnflüssig gemacht, auf die zu behandelnde Strassenoberfläche aufgebraust und anschliessend mit Splitt abgedeckt. Der darauf folgende Viskositätsanstieg des Splittbelages erfolgt schliesslich im wesentlichen durch Polymerisation der pflanzlichen und/oder tierischen Öle und/oder Fette.

Das mindestens eine pflanzliche und/oder tierische Öl oder Fett dient also - wie das organische Lösungsmittel der bekannten Strassenbaubindemittel - unter anderem dazu, die zur Verarbeitung des Bindemittels notwendige Viskosität einzustellen, das heisst das im Bindemittel enthaltene Bitumen zur Verarbeitung in einen fliessfähigen Zustand überzuführen. Im Gegensatz zu den im organischen Lösungsmittel enthaltenen Kohlenwasserstoffverbindung verbleibt jedoch das mindestens eine pflanzliche oder tierische Öl oder Fett nach dem Aufbrausen des Bindemittels auf die Strassenoberfläche im Strassenbelag und dient zusätzlich dazu, den Splittbelag durch Polymerisation zu verfestigen.

Das aus der DE-A-30 02 371 bekannte Bitumenpräparat dient ausschliesslich dazu, ein Dichtungsmittel herzustellen, das Stearin, Paraffin und gegebenenfalls Leinölfirnis enthält. Es ist aber insbesondere keinesfalls als Asphalt-Bindemittel für die Herstellung von Asphaltsplittbelägen verwendbar, da dieses - wie bereits erwähnt - einen Stabilisator, z.B. β-Naphtol, enthält. Dieser Stabilisator dient nämlich dazu, dadurch eine Änderung der Viskosität des Bitumenpräparates zu vermeiden, dass er die Polymerisation des mindestens einen pflanzlichen Öles und eine dadurch bedingte Viskositätserhöhung des Bitumenpräparates verhindert. Dieses Bitumenpräparat und dessen Verwendung sind somit vom vorliegenden Strassenbaubindemittel verschieden, haben eine andere Aufgabe und geben keine Anregung für die Erfindung.

Zur CH-A-641 822 sei vermerkt, dass aus dieser nur hervorgeht, dass pflanzliche Öle zur homogenen Vermischung eines Strassenbaubitumens mit einem Polymerisat verwendbar sind. An keiner Stelle dieser Druckschrift wird aber ausgeführt, dass der Fachmann von der geoffenbarten Vorgehensweise zur Einstellung der Viskosität des Strassenbau-Bindemittels mittels eines organischen Lösungsmittels, wie etwa Toluol oder Xylol, abweichen und dafür das mindestens eine pflanzliche Öl vorsehen kann. Dieser Patentschrift kann daher als technische Gesamtlehre lediglich entnommen werden, dass sich Strassenbaubitumen und Polymerisate unter Verwendung eines pflanzlichen Öles besonders gut vermischen lassen, nicht aber, dass pflanzliche Öle das Lösungsmittel ersetzen können, welches zur Einstellung der Viskosität des Bindemittels dient.

Nachfolgend werden einige Ausführungsbeispiele für die Zusammensetzung eines Bindemittels angegeben.

### 1. Beispiel eines Bindemittels zur Herstellung eines Asphaltsplittbelages

| | |
|---|---|
| 89,7 Gew.% | Bitumen B 180/220 |
| 10,0 Gew.% | Leinöl |
| 0,15 Gew.% | Kalziumstearat |
| 0,15 Gew.% | Stearinsäure |

Das Bitumen B 180/220 ist ein Destillationsbitumen, dessen Penetration durch die beiden Zahlen 180 und 220 definiert ist.

### 2. Beispiel eines Bindemittels zur Herstellung eines Asphaltsplittbelages:

| | |
|---|---|
| 59,7 Gew.% | Bitumen B 180/220 |
| 30,0 Gew.% | Polymerhaltiges Bitumen |
| 10,0 Gew.% | Leinöl |
| 0,3 Gew.% | REDICOTE^{TM} N 422 |

Bei dem polymerhaltigen Bitumen handelt es sich um ein Destillationsbitumen, das aus Kunststoff bestehende Polymere, beispielsweise Elastomere und/oder Thermoplaste enthält.

Das unter der Marke REDICOTE N 422 bekannte Mittel hat dispergierende Eigenschaften und dient dazu, die Haftung zwischen dem Bindemittel und dem Splitt bzw. der Unterlage zu verbessern.

### 3. Beispiel eines Bindemittels zur Herstellung eines Asphaltsplittbelages:

Zusammensetzung gemäss dem Beispiel 2, jedoch mit dem Unterschied, das anstelle von Leinöl ein anderes Öl, beispielsweise Rapsöl, verwendet wird.

Ein grosser Vorteil dieser erfindungsgemässen Verwendungsform eines Bindemittels besteht nun darin, dass dieses im Gegensatz zu den bereits bekannten Bindemitteln beim Verarbeiten keine Dämpfe von stark riechenden oder giftigen Kohlenwasserstoffverbindungen bildet.

Zudem besitzt das erfindungsgemässe Bindemittel einen höheren Flammpunkt als die bisher bekannten Bindemittel, so dass als weiterer Vorteil natürlich auch die einfache und sichere Verwendung des Bindemittels bei verhältnismässig hohen Verarbeitungstemperaturen zu beachten ist.

Bei der Wahl der Bindemittelart sind die Beschaffenheit der zu behandelnden Strassenoberfläche, die Verkehrsbeanspruchung und die Klimaverhältnisse sowie auch die Jahreszeit, in der der Asphaltsplittbelag auf die Strassenoberfläche aufgebracht wird, zu berücksichtigen. Das Bindemittel muss eine gute Benetzung des Splittes sowie eine gute Haftung des Bitumens mit Splitt und Unterlage gewährleisten. Die Bindemittel können somit je nach Beschaffenheit der Unterlage sowie abhängig von der Verkehrsbeanspruchung und den Klimaverhältnissen in ihrer Zusammensetzung variieren.

Daher sei an dieser Stelle darauf hingewiesen, dass die anhand der Beispiele 1 bis 3 beschriebenen Mischungen nur eine Auswahl von mehreren möglichen Ausführungsformen der Erfindung darstellen und in verschiedener Hinsicht geändert werden können, wobei das Bindemittel vorzugsweise mindestens 3 Gew.% eines tierischen und/oder pflanzlichen Fettes oder Öles enthält.

So kann das Bindemittel beispielsweise auch ein Gemisch mehrerer tierischer und/oder pflanzlicher Fette oder Öle oder mindestens einen aus derartigen Stoffen gebildeten Firnis oder ein Dicköl enthalten. Firnisse sind pflanzliche oder tierische Öle, dessen Trocknungsfähigkeit durch Zusatz von Trockenstoffen, sogenannten Siccativen, verbessert wird. Dies kann beispielsweise durch Zusatz von Metallseifen erfolgen. Diese werden zum Beispiel aus Blei, Mangan oder Kobalt mit Fettsäuren, Harzsäuren oder Naphtensäuren gebildet.

Ferner sei darauf hingewiesen, dass man die bituminösen Bindemittel auch zur Herstellung einer aus mehreren Asphaltschichten bestehenden Asphaltbetonstrasse verwenden kann. Das erfindungsgemässe Bindemittel kann dabei zur Herstellung aller Asphaltschichten verwendet werden, wobei es dazu durch Erhitzen dünnflüssig gemacht, einem Gesteinsgemisch beigefügt und mit diesem auf die zu beschichtende Strassenunterlage aufgetragen wird. Das erfindungsgemässe Bindemittel weist in diesem Fall gegenüber den handelsüblichen und zur Herstellung von Asphaltbetonstrassen dienenden Bindemitteln den Vorteil auf, dass es bei einer tieferen, beispielsweise 100 bis 120°C betragenden Temperatur mit dem Gesteinsgemisch vermischt und verarbeitet werden kann. Dazu sei bemerkt, dass die bereits bekannten und zur Herstellung einer Asphaltbetonstrasse dienenden Bindemittel vorzugsweise bei einer über 140°C betragenden Temperatur mit dem Gesteinsgemisch vermischt werden.

Die mit der Verwendung des erfindungsgemässen Bindemittels erreichbaren niedrigeren Verarbeitungstemperaturen sind insbesondere dann von grossem Vorteil, wenn zur Herstellung einer Asphaltbetonstrasse dem zu verwendenden Gesteinsgemisch ein aus Altbelagsbestandteilen bestehendes teerhaltiges Recycling-Gut beigefügt wird. Letzteres setzt nämlich bei hohen - über 140°C liegenden - Mischtemperaturen mutagen und/oder karzinogen wirkende Teerbestandteile frei, die die Gesundheit der das Mischgut verarbeitenden Personen gefährden.

Eine mit teerhaltigem Recycling-Gut angereicherte Asphaltschicht kann dabei beispielsweise aus 63 Gew.% Mineralsteingut, 30 Gew.% Recycling-Gut, 4 Gew.% Steinmehl und 3 Gew.% Bindemittel der erfindungsgemässen Art gebildet sein. In diesem Fall setzt sich das Bindemittel aus dem im Recycling-Gut bereits enthaltenen Bitumen (Bitumen des ursprünglich verwendeten Bindemittels), dem mindestens einen pflanzlichen und/oder tierischen Öl oder Fett und gegebenenfalls aus zusätzlichem, neu hinzugefügtem Bitumen zusammen. Das Bitumen des Bindemittels wird also bei dieser Verwendungsform mindestens zum Teil aus Bitumen gebildet, das bereits im teerhaltigen Recycling-Gut enthalten ist.

Schliesslich besteht auch noch die Möglichkeit, das Bindemittel nicht nur zur Herstellung von Strassenbelägen sondern in analoger Weise auch zur Herstellung von Klebeschichten (beispielsweise zum Verkleben zweier Asphaltschichten einer Asphaltbetonstrasse) zu verwenden.

## Patentansprüche

1. Verwendung eines mindestens zum Teil aus Bitumen bestehenden, heiss anzuwendenden Bindemittels, das frei von einem Kohlenwasserstoffverbindungen enthaltenden Lösungsmittel ist und mindestens ein tierisches und/oder pflanzliches Fett oder Öl enthält, zur Herstellung von Asphalt-Strassenbelägen.

2. Verwendung eines Bindemittels nach Anspruch 1 zur Herstellung von Asphaltsplittbelägen.

3. Verwendung eines Bindemittels nach Anspruch 1 zur Herstellung von Recycling-Asphalt enthaltendem Asphaltbeton.

4. Verwendung nach einem der Ansprüche 1 bis 3, dadurch gekennzeichnet, dass das Bindemittel mindestens 3 Gew.% eines tierischen und/oder pflanzlichen Fettes oder Öles enthält.

5. Verwendung nach Anspruch 4, dadurch gekennzeichnet, dass das Bindemittel mindestens 3 Gew.% Leinöl enthält.

6. Verwendung nach einem der Ansprüche 4 oder 5, dadurch gekennzeichnet, dass das Bindemittel Stearinsäure und/oder ein Stearinsäuresalz enthält.

7. Verwendung nach Anspruch 6, dadurch gekennzeichnet, dass das Bindemittel eine Mischung ist aus:
| | |
|---|---|
| 89,7 Gew.% | Bitumen B 180/220 |
| 10 Gew.% | Leinöl |
| 0,15 Gew.% | Kalziumstearat |
| 0,15 Gew.% | Stearinsäure |

8. Verwendung nach Anspruch 5, dadurch gekennzeichnet, dass das Bindemittel eine Mischung ist aus:

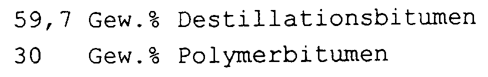

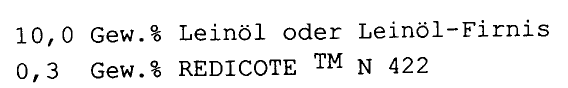

9. Verwendung nach einem der Ansprüche 1 bis 3, dadurch gekennzeichnet, dass das Bindemittel ein Sikkativ enthält.

## Claims

1. Use of a binding agent, which is to be applied hot, consists at least in part of bitumen, is free of a solvent containing hydrocarbon compounds and contains at least one animal and/or vegetable fat or oil, for the production of asphalt road surfaces.

2. Use of a binding agent according to claim 1 for the production of asphalt chipping surfaces.

3. Use of a binding agent according to claim 1 for the production of asphalt concrete containing recycled asphalt.

4. Use according to one of the claims 1 to 3, characterised thereby, that the binding agent contains at least 3 % by weight of an animal and/or vegetable fat or oil.

5. Use according to claim 4, characterised thereby, that the binding agent contains at least 3 % by weight of linseed oil.

6. Use according to claim 4 or 5, characterised thereby, that the binding agent contains stearic acid and/or a stearic acid salt.

7. Use according to claim 6, characterised thereby, that the binding agent is a mixture of
| | |
|---|---|
| 89.7% | by weight of bitumen B 180/220, |
| 10 % | by weight of linseed oil, |
| 0.15% | by weight of calcium stearate and |
| 0.15% | by weight of stearic acid. |

8. Use according to claim 5, characterised thereby, that the binding agent is a mixture of
| | |
|---|---|
| 59.7 % | by weight of distillate bitumen, |
| 30 % | by weight of polymer bitumen, |
| 10 % | by weight of linseed oil or boiled linseed oil and |
| 0.3 % | by weight of REDICOTE (trade mark) N 422. |

9. Use according to one of the claims 1 to 3, characterised thereby, that the binding agent contains a desiccant.

## Revendications

1. Utilisation d'un liant comprenant au moins partiellement du bitume et à appliquer à chaud, qui est exempt d'un solvant contenant des composés hydrocarbonés et contient au moins une graisse ou huile animale et/ou végétale, pour la fabrication de revêtements routiers asphaltiques.

2. Utilisation d'un liant selon la revendication 1 pour la fabrication de revêtements de gravillon enrobé d'asphalte.

3. Utilisation d'un liant selon la revendication 1 pour la fabrication de béton asphaltique contenant de l'asphalte de recyclage.

4. Utilisation selon l'une quelconque des revendications 1 à 3, caractérisée en ce que le liant contient au moins 3 % en poids d'une graisse ou huile animale et/ou végétale.

5. Utilisation selon la revendication 4, caractérisée en ce que le liant contient au moins 3 % en poids d'huile de lin.

6. Utilisation selon l'une quelconque des revendications 4 ou 5, caractérisée en ce que le liant contient de l'acide stéarique et/ou du sel d'acide stéarique.

7. Utilisation selon la revendication 6, caractérisée en ce que le liant est un mélange constitué de
89,7 % en poids de bitume B 180/220
10 % en poids d'huile de lin
0,15 % en poids de stéarate de calcium
0,15 % en poids d'acide stéarique.

8. Utilisation selon la revendication 5, caractérisée en ce que le liant est un mélange constitué de
59,7 % en poids de bitume de distillation
30 % en poids de bitume à polymère
10,0 % en poids d'huile de lin ou de vernis à l'huile de lin
0,3 % en poids de REDICOTE™ N 422.

9. Utilisation selon l'une quelconque des revendications 1 à 3, caractérisée en ce que le liant contient un siccatif.
